# EUROPÄISCHE PATENTSCHRIFT

(11) **EP 1 223 228 B1**
(45) Veröffentlichungstag und Bekanntmachung des Hinweises auf die Patenterteilung: **06.07.2005**
(21) Anmeldenummer: 01129967.4
(22) Anmeldetag: 17.12.2001
(51) Int. Cl.: C21D 9/60, C21D 9/573, H05B 6/44

(54) **Induktionsglühe**
Induction heating apparatus
Dispositif de chauffage par induction

(30) Priorität: 10.01.2001 DE 10100829
(43) Veröffentlichungstag der Anmeldung: 17.07.2002
(73) Patentinhaber: Menge, Rainer, Dr.-Ing., 35745 Herborn (DE)
(72) Erfinder: Menge, Rainer, Dr.-Ing., 35745 Herborn (DE)
(74) Vertreter: Schütz, Peter, Dipl.-Ing.

(56) Entgegenhaltungen:
- EP-A- 0 349 299
- GB-A- 2 238 007
- US-A- 4 118 617
- US-A- 4 863 145

## Beschreibung

Die Erfindung betrifft eine Induktionsgluhe zur konduktiven Erwärmung eines Drahtes mit den im Oberbegriff des Anspruchs 1 angegebenen Merkmalen. US4118617 betrifft ein Verfahren und eine Vorrichtung zur Kontinuierlichen Wärmebehandlung von Draht und Bandmaterial aus Metall.

Eine derartige Induktionsgluhe ist aus der DE 39 20 139 A1 bekannt. Bei ihr wird ein warmezubehandelnder Draht uber zwei in gegenseitigem Abstand angeordnete Rollen in einer Schleife gefuhrt. Eine dieser Rollen dient als Kurzschlußrolle, uber welche der Draht sowohl beim Eintritt in die Schleife als auch beim Austritt aus der Schleife gefuhrt wird und welche dabei eine elektrisch leitende Verbindung zwischen dem einlaufenden und dem auslaufenden Bereich herstellt, so daß die um die beiden Rollen herumgeführte Drahtschleife eine in sich geschlossene Leiterschleife bildet. Zwischen den beiden Rollen verlauft der Draht in zwei parallelen geradlinigen Abschnitten, von denen der eine durch zwei hintereinander angeordnete Induktionsheizvorrichtungen verlauft, die in der Drahtschleife eine Spannung induzieren, welche einen entsprechenden Strom zur Aufheizung des Drahtes fließen läßt. Die Kurzschlußrolle dient gleichzeitig als Kuhlrolle für den auslaufenden Draht.

Problematisch ist bei derartigen Induktionsgluhen die Erzeugung einer hinreichend hohen Induktionsspannung in der Drahtschleife, um die erforderliche Gluhleistung einzutragen, und die Einstellung der Induktionsspannung. Weitere Probleme sind die optimierte Baugroße zwischen den elektrischen und mechanischen Komponenten sowie die Beeinträchtigungen des Wirkungsgrades bzw. der Blindleistung infolge von Streuinduktivitaten.

Der Erfindung liegt die Aufgabe zugrunde, eine derartige Induktionsgluhe dahingehend zu verbessern, daß bei relativ handlicher Baugroße und sehr gutem Wirkungsgrad eine auch fur hochohmige Werkstoffe ausreichend hohe Induktionsspannung in der Drahtschleife erzielbar ist, die sich in einem weiten Bereich einstellen laßt, um sehr unterschiedliche Drahtmaterialien und -abmessungen optimal einer Warmebehandlung unterziehen zu konnen.

Diese Aufgabe wird durch die im Anspruch 1 angegebenen Merkmale gelost. Weiterbildungen der Erfindung sind in den Unteranspruchen gekennzeichnet.

Durch die Verwendung mehrerer Primärwicklungen mit Magnetkernen aus hochpermeablem Material mit hoher Sattigungsinduktivitat lassen sich jeweils einzelne Spannungsbeitrage induzieren, die sich in der Kurzschlußdrahtschleife zu einer Gesamtspannung summieren, die relativ hohe Werte annehmen kann, so daß sich auch bei geringer Verweildauer des Drahtes in der Schleife bereits die gewünschten Behandlungstemperaturen erreichen lassen. Das bedeutet, daß man eine relativ hohe Drahtgeschwindigkeit auch bei kompakter Bauweise der Glühe erreichen kann. Durch eine multifilare Wicklung der Primärwicklungen lassen sich in Verbindung mit dem hochpermeablen Kernmaterial die Streuinduktivitaten klein halten, so daß der Wirkungsgrad entsprechend hoch wird, weil zusatzliche induktive Spannungsabfalle minimiert werden. Eine besonders zweckmäßige Wickelart ist die sinoidale Wicklung, die das Aufbringen vieler Windungen der multifilaren Teilwicklungen ohne gegenseitige Überschneidung erlaubt.

Bei einer fakultativen Ausgestaltung der Erfindung als Mehrdrahtglühe werden mehrere Drahte uber jeweils eigene Rollensysteme gefuhrt, wobei sie gemeinsam durch die Magnetkerne der Transformatoren als sekundare Windung laufen und gemeinsam erwarmt werden. Die Magnetkerne konnen in diesem Fall rechteckig geformt sein, um auch eine größere Anzahl von parallel laufenden Drähten aufzunehmen. Die Drahte konnen im Querschnitt rund oder rechteckig bzw. flach (Bander) sein.

Ein erwünschter großer Einstellbereich für die Induktionsspannung wird erfindungsgemaß erzielt durch eine Ansteuerung der Primärwicklungen mit Impulsen, die eine Einstellbarkeit mehrerer Parameter zulassen wie Kurvenform, Amplitude, Breite und Frequenz. Bevorzugt werden symmetrische, bipolare Impulse, weil sich dabei das Auftreten einer Gleichstromkomponente in den Primarwicklungen vermeiden laßt, welche eine unerwunschte Vormagnetisierung der Kerne zur Folge hatte, die den nutzbaren Aussteuerbereich der Magnetkennlinie einschranken wurde. Zweckmaßigerweise wird mit Hilfe eines Stromrichters aus der vom Drehstromnetz oder einer anderen Quelle gelieferten Wechselspannung eine wellige oder geglattete Gleichspannung erzeugt, deren Große als Zwischenkreisspannung gegebenenfalls einstellbar gemacht wird. Diese Gleichspannung laßt sich dann mit einem in geeigneter Weise steuerbaren Wechselrichter in bipolare Impulse einstellbarer Kurvenform, Frequenz und Breite umwandeln, wahrend die Impulsamplitude sich über die Zwischenkreis-Gleichspannung einstellen laßt.

Die vom Wechselrichter an die Transformatoren der Glühe abgegebene Leistung kann uber eine Einstellung der Spannung im Zwischenkreis beispielsweise durch Stellung des Zundwinkels im netzseitigen Stromrichter oder durch einen eingefügten Tiefsetz- oder Hochsetzsteller bewirkt werden oder durch Veränderung der Einschaltdauer der Ventile im Wechselrichter herbeigeführt werden, was zur Veränderung des Zeitverlaufs der Wechselrichter-Ausgangsspannung und damit zu Änderungen von deren Effektivwert fuhrt, wobei die Frequenz der Ausgangsspannung und deren im Wechselrichter gestellter Effektivwert durch ein geeignetes Ansteuergerat vorgegeben werden konnen. Diese mehrfachen Einstellparameter erlauben eine erhebliche Erweiterung des Einstellbereiches für die in der Drahtschleife induzierte Spannung, so daß auch bei sehr unterschiedlichen Drahtmaterialien und -dimensionen immer die optimale Behandlungstemperatur gewahlt werden kann.

Zweckmaßigerweise legt man die Schaltung so aus, daß die Transformatoren einzeln zugeschaltet werden konnen, um die Einstellmoglichkeiten den jeweiligen Widerstandsverhaltnissen des Drahtmaterials und der Drahtgeschwindigkeit in Stufen weitestgehend anpassen zu konnen, indem außer den Einstellmoglichkeiten der Spannungsversorgung (uber die Hohe der Zwischenkreisspannung und/oder über die Pulsbreite und/oder über die Wechselrichter-Frequenz) noch über die Wahl (Anzahl) der Teilspannungen, welche die einzelnen Kernpakete induzieren, Einfluß auf die Gluhparameter genommen werden kann.

Ein gunstiger, bevorzugter Frequenzbereich fur die Impulse liegt zwischen etwa 4 und 12 kHz und daruber. Zweckmaßigerweise verwendet man bei diesen Frequenzen HF-Litze fur die Primarwicklungen, damit der Wirkungsgrad nicht durch den Skin-Effekt verschlechtert wird. Mit der erfindungsgemaßen Anordnung lassen sich Leistungen in einem weiten Bereich von beispielsweise 3 kW bis hinauf zu 120 kW und darüber in die Drahtschleife zu deren Aufheizung übertragen.

Vorteilhafterweise wird innerhalb der Drahtschleife kurz vor der Kurzschlußrolle eine Kuhldüse angeordnet, mit welcher der warmebehandelte Draht unmittelbar vor dem Austreten aus der Schleife wieder abgekuhlt wird und die Kurzschlußrolle nicht unnotig erwarmt wird. Nach Verlassen der Schleife kann der Draht zweckmaßigerweise noch durch eine hinter der Kurzschlußrolle vorgesehene Abblasduse trockengeblasen werden, um die aus der Kuhlduse verschleppte Kuhlflussigkeit zu entfernen.

Es sei nun anhand der beiliegenden Zeichnungen ein Ausfuhrungsbeispiel der Erfindung veranschaulicht. Es zeigen:
- Fig. 1: eine Darstellung zur Veranschaulichung des Prinzips einer Induktionsgluhe;
- Fig. 2: eine Prinzipdarstellung der erfindungsgemaßen Induktionsgluhe mit drei Transformatoren;

- Fig. 3: ein Schaltungsbeispiel für die Stromquelle, hier zur getrennten Speisung der drei Primärwicklungen gemäß Fig. 2;
- Fig. 4: ein aus drei Magnetkernen aufgebautes Kernpaket mit einer zu Veranschaulichungszwecken nur monofilaren Primarwicklung;
- Fig. 5: die herausgezeichnete Wicklung ohne Kern;
- Fig. 6: eine Skizze zur Veranschaulichung der sinoidalen Wicklung;
- Fig. 7: das Kernpaket gemäß Fig. 4 mit einer trifilaren Wicklung; und
- Fig. 8: eine Draufsicht auf das bewickelte Kernpaket gemäß Fig. 7.

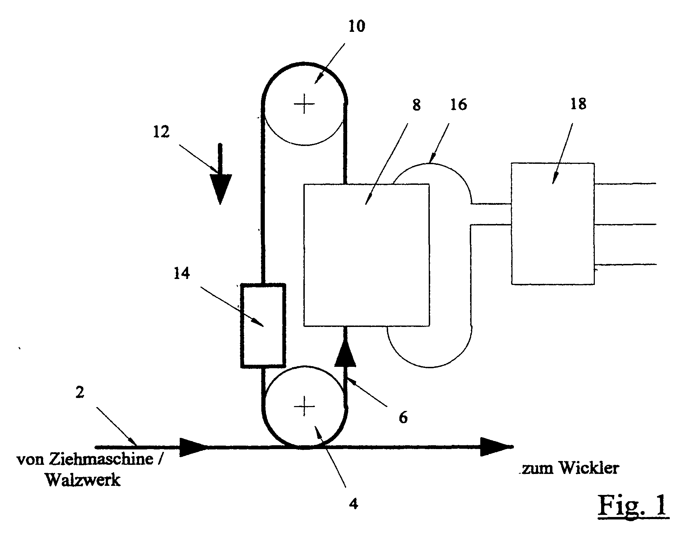

Bei der in Fig. 1 veranschaulichten Induktionsgluhe wird der von einer Ziehmaschine oder vom Walzwerk kommende Rund- oder Flachdraht 2 zunächst über eine Kurzschlußrolle 4 in eine Schleife 6 umgelenkt, die zunachst durch einen Induktor 8 verlauft, der Heizstrom in die Drahtschleife induziert, in welcher der Draht über eine Umlenkrolle 10 wieder in Richtung auf die Kurzschlußrolle 4 umgelenkt wird, wie der Richtungspfeil 12 veranschaulicht. Kurz vor dem Auftreffen auf die Kurzschlußrolle 4 durchläuft der Draht 2 eine Kuhlvorrichtung 14 in Form einer hier nicht naher veranschaulichten Kuhlduse, wie sie beispielsweise Gegenstand der deutschen Patentanmeldung P 100 58 369.5 ist. Mittels der Kurzschlußrolle 4 wird der Draht zu einer ebenfalls hier nicht veranschaulichten Wickelvorrichtung umgelenkt, wobei über die Kurzschlußrolle ein Kontakt zum einlaufenden Draht hergestellt wird, so daß die Schleife 6 in sich kurzgeschlossen ist. Der Induktor 8 besteht grundsatzlich aus einem magnetischen Ringkern, auf den eine Primärwicklung aufgewickelt ist und durch den die Drahtschleife 6 als kurzgeschlossene einwindige Sekundarwicklung verläuft. Bei Speisung der Primarwicklung mit einer Wechselspannung induziert diese eine dem Windungsverhaltnis entsprechende Sekundarspannung, die einen Sekundarstrom fließen laßt, welcher den Draht in der Drahtschleife 6 aufheizt. Die schematisch angedeutete Primärwicklung ist mit 16 und die sie speisende Stromquelle mit 18 bezeichnet.

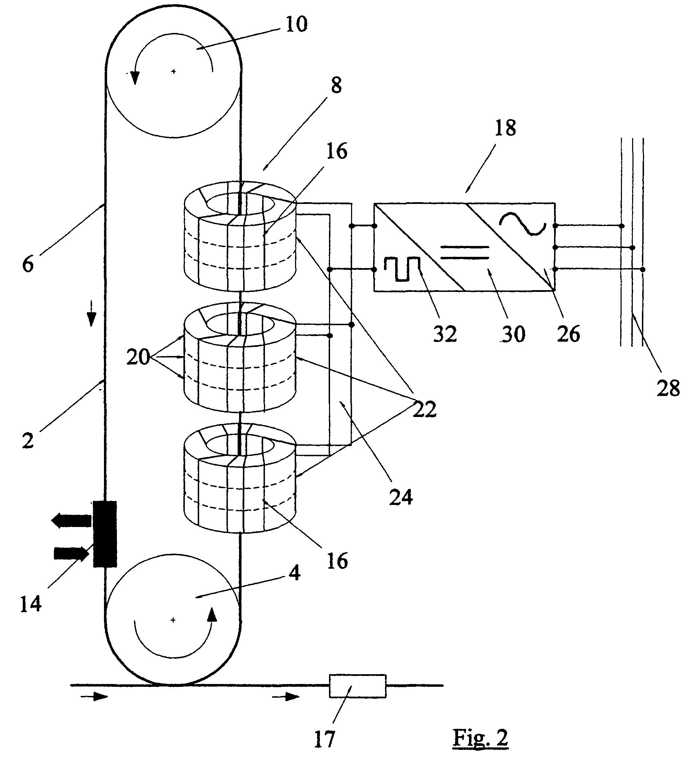

In Fig. 2 ist nun die erfindungsgemaße Ausgestaltung einer solchen Induktionsgluhe veranschaulicht. Im dargestellten Fall sind drei aus Ringkernen 20 zusammengesetzte Kernpakete 22 dargestellt: im veranschaulichten Fall besteht jedes Paket aus drei Ringkernen. Die Kernpakete 22 sind koaxial zueinander angeordnet, so daß der Draht 2 in der Schleife 6 die Pakete nacheinander durchlauft. Die Pakete 22 sind jeweils mit einer zugehorigen Primärwicklung 16 bewickelt, und die drei Primärwicklungen sind über Zuleitungen 24 mit der Stromquelle 18 verbunden. Diese liefert Impulse zur Speisung der Primarwicklungen, und jede Primarwicklung induziert in der Drahtschleife 6 einen Spannungsbeitrag: diese Spannungsbeitrage summieren sich zu einer Gesamtspannung als Schleifenspannung, die den entsprechenden Strom zur Erwarmung des Drahtes fließen laßt. Da der uber ein einzelnes Paket induzierbare Spannungsanteil begrenzt ist, kann man die gewünschte maximale Schleifenspannung durch Vorsehen einer entsprechenden Anzahl von Paketen mit Primärwicklungen, deren Sekundarspannungsanteile sich in der Drahtschleife addieren, zu erreichen suchen. Im dargestellten Fall sind dazu drei Kernpakete vorgesehen; reicht dies nicht aus, so kann man die Zahl der Kernpakete erhohen und dazu die Drahtschleife entsprechend langer machen, oder zusatzliche Pakete auf dem zurucklaufenden Schleifenabschnitt vorsehen. Durch wahlweise Einzelansteuerung der Kernpakete laßt sich der Bereich der Einstellmoglichkeiten noch erweitern. Ferner ist eine Abblasduse 17 für den von der Kurzschlußrolle 4 auslaufenden Draht 2 dargestellt.

Die Spannungsquelle 18 zur Speisung der Primärwicklungen 16 besteht erfindungsgemaß aus einem Gleichrichter 26 fur die Netzwechselspannung, die im dargestellten Fall aus einem Drehstromnetz 28 entnommen wird. Die in einem Zwischenkreis 30 verfugbare Gleichspannung wird mit einem Wechselrichter 32 in eine impulsformige Wechselspannung umgewandelt, welche uber die Zuleitung 24 den drei Primarwicklungen 16 zugefuhrt wird.

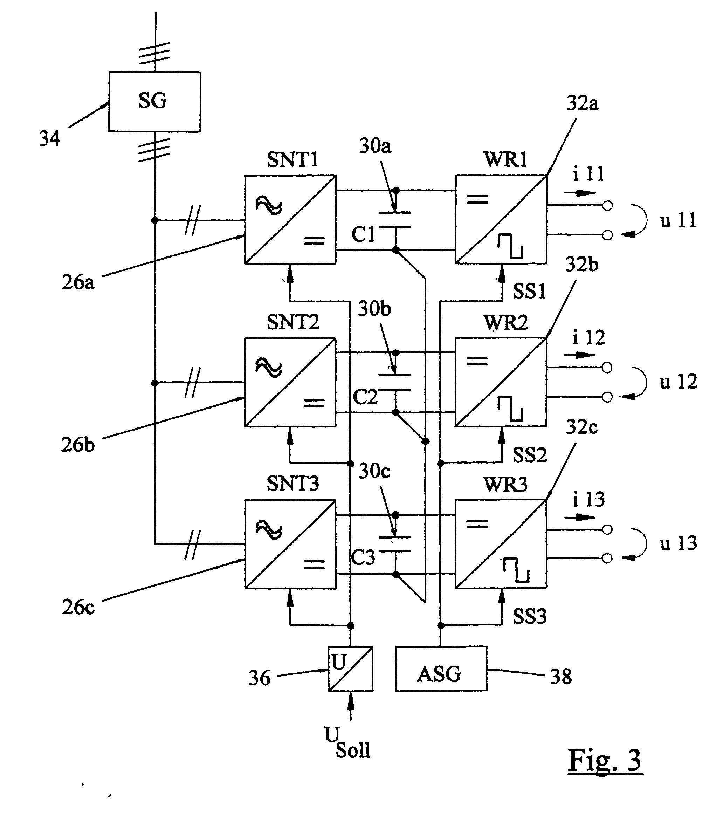

Im folgenden sei anhand von Fig. 3 ein Ausführungsbeispiel für die Stromquelle 18 naher erlautert. Über ein Schaltgerat 34 werden die drei Phasen des Drehstromnetzes je einem Gleichrichter (Stromrichter) 26a, 26b bzw. 26c zugefuhrt, die hier als Schaltnetzteile SNT1, SNT2 bzw. SNT3 ausgebildet sind und jeweils eine Gleichspannung an einen Zwischenkreis 30a, 30b bzw. 30c liefern. Die Hohe dieser Gleichspannung ist mit Hilfe eines Steuersignals U von einem Steuersignalgenerator 36 einstellbar. Die Zwischenkreise 30a, 30b und 30c sind hier durch Speicherkondensatoren C1, C2 bzw. C3 veranschaulicht. Die Gleichspannungen werden Wechselrichtern 32a, 32b bzw. 32c zugefuhrt und von diesen in Impulsspannungen u11, u12 bzw. u13 umgewandelt, deren Form, Breite und Frequenz sich über Steuersignale SS1, SS2 bzw. SS3 von einem Ansteuergerat 38 variieren laßt, um den Effektivwert der Impulsspannung zu verandern. Hierzu kann man die Amplitude der Impulsspannungen zusatzlich oder auch allein uber die Hohe der dem Wechselrichter vom Stromrichter zugefuhrten Gleichspannung verandern, die von der Steuerspannung U des Steuersignalgenerators 36 abhangt, mit dem sich die Einstellparameter der Stromrichter (wie z.B. Zundwinkel etc.) verandern lassen.

Die Ausgangsspannungen u11, u12 und u13 werden den drei Primarwicklungen 16 zugefuhrt, in denen daraufhin Primarstrome i11, i12 bzw. i13 zum Fließen kommen. Diese Primarstrome induzieren wie gesagt in der die Sekundärwicklung dieses Transformators bildenden Drahtschleife 6 entsprechende Induktionsspannungsanteile, die sich in der Schleife zur Gesamtschleifenspannung addieren, die wiederum entsprechend dem Drahtwiderstand einen Strom in der Schleife fließen laßt.

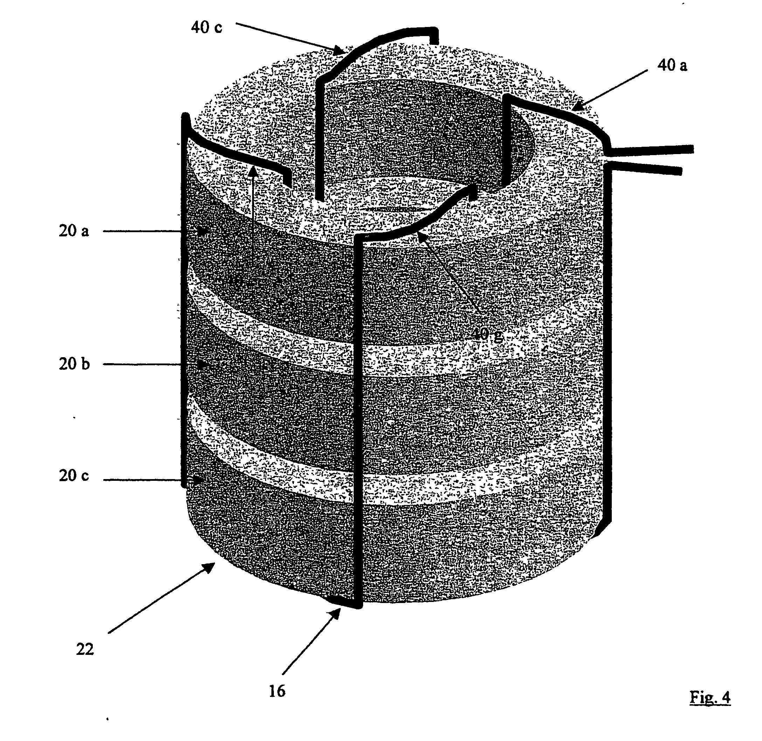

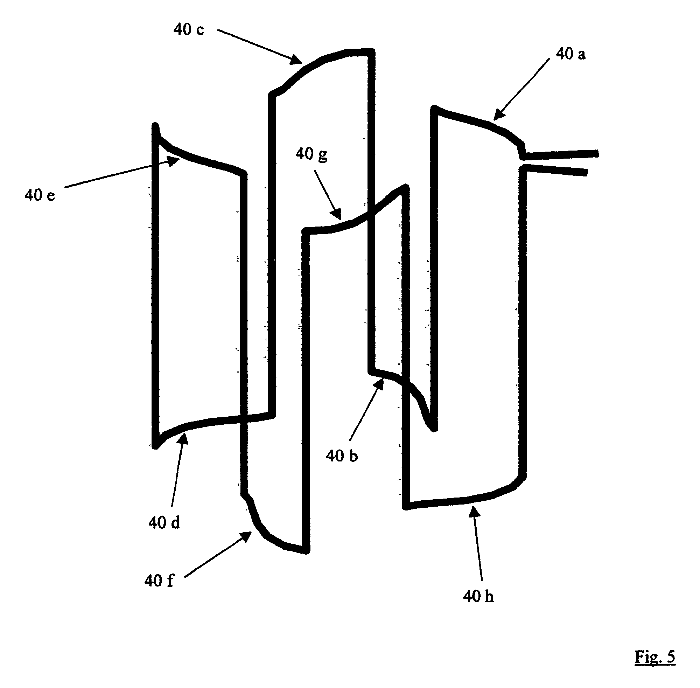

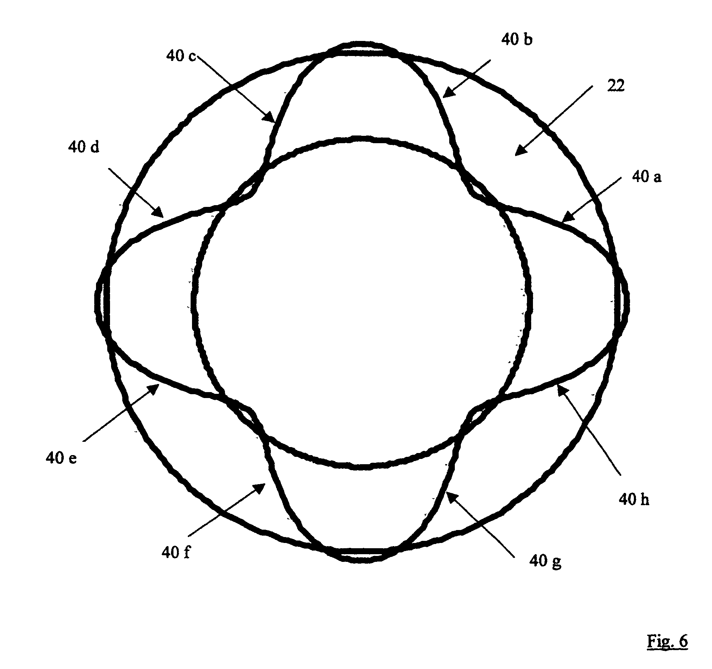

Es sei nun die Ausbildung der Primärwicklungen 16 auf den Kernpaketen 22 anhand der Figuren 4 bis 8 beschrieben. Fig. 4 zeigt ein aus drei Ringkernen 20a, 20b und 20c zusammengesetztes Kernpaket 22, auf das die Primärwicklung 16 mit vier eingezeichneten Windungen aufgewickelt ist. Fig. 5 zeigt diese Windungen für sich, so daß samtliche Windungsabschnitte sichtbar werden. Die uber die Stirnflachen des Kernpaketes verlaufenden Windungsabschnitte sind der Reihe nach mit 40a bis 40h bezeichnet, wobei die Abschnitte 40a, 40c, 40e und 40g die oberen und 40b, 40d, 40f und 40h die unteren Abschnitte sind. Die außen bzw. innen am Kern verlaufenden senkrechten Windungsabschnitte sind im Interesse der Klarheit der Figur nicht bezeichnet. Erfindungsgemäß sind die Windungen der Primärwicklung sinoidal verlegt, um bei einer multifilaren Ausbildung der Primarwicklung Windungsuberschneidungen zu vermeiden. Diese Wicklungsausbildung ist in Fig. 6 verdeutlicht, in der erkennbar ist, daß die einzelnen Wicklungsabschnitte 40a bis 40h (im Polarkoordinatensystem) durch Abschnitte einer Sinusfunktion gebildet werden.

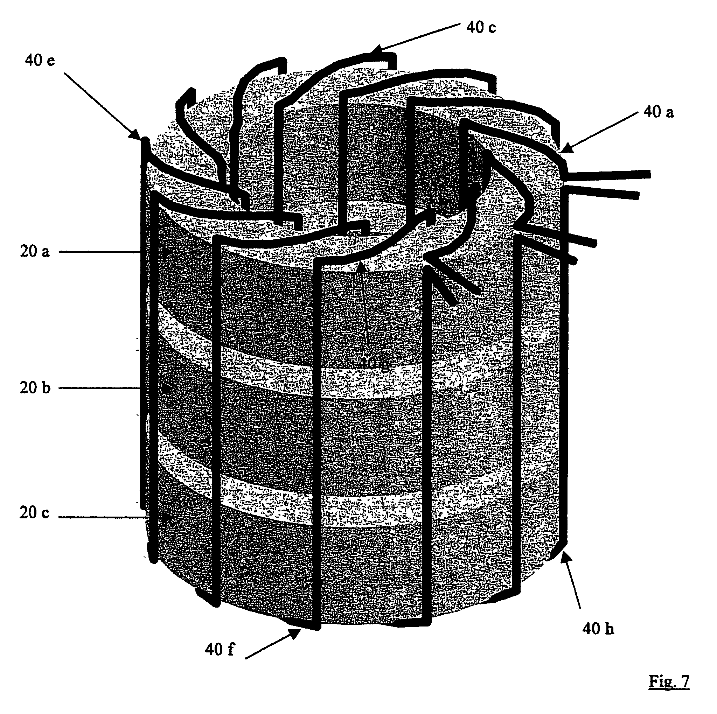

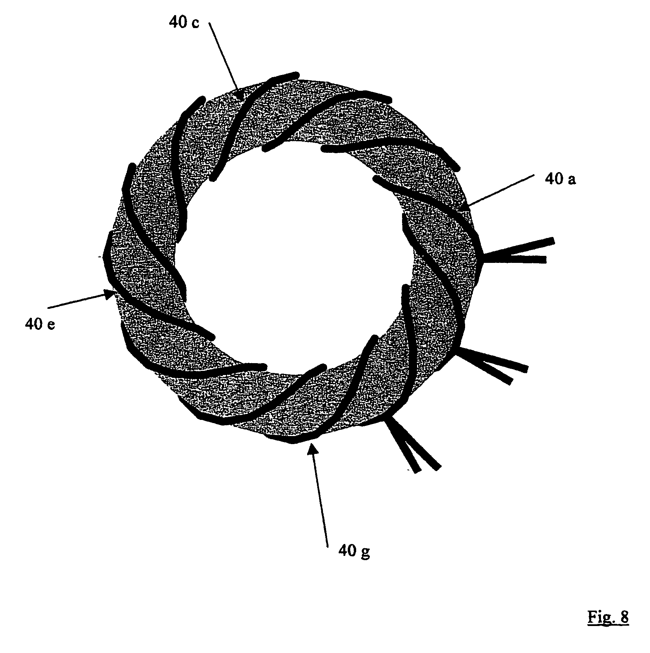

Eine trifilare Wicklung ist in den Figuren 7 und 8 veranschaulicht, in denen die monofilaren Windungen der Figuren 4 bis 6 in gleicher Weise bezeichnet sind, wahrend die dazwischenliegenden Windungen der Übersicht halber nicht eigens bezeichnet sind. Durch die multifilare Ausbildung der Primärwicklung lassen sich die Streuinduktivitaten niedrig halten, so daß die Primarleistung weitgehend verlustfrei in das Kernpaket eingespeist wird und als Induktionsleistung fur den Sekundarstrom in der Drahtschleife 6 zur Verfugung steht. Das beschriebene Ausfuhrungsbeispiel einer trifilaren Wicklung bedeutet jedoch keine Beschrankung der Erfindung, sondern erforderlichenfalls konnen auch andere multifilare Wicklungen Anwendung finden.

## Patentansprüche

1. Induktionsgluhe zur konduktiven Erwarmung mindestens eines Drahtes, mit mehreren Transformatoren, deren parallel angesteuerte Primärwicklungen um jeweils einen eigenen Magnetkern gewickelt sind und deren Sekundärwicklungen durch eine gemeinsame in sich kurzgeschlossene Drahtschleife gebildet werden, in welcher der Draht mit Hilfe von Umlenkrollen nacheinander durch die Magnetkerne gefuhrt wird, sowie mit einer Kuhlvorrichtung fur den warmebehandelten Draht und einer Spannungsquelle zur Speisung der Primärwicklungen,
**dadurch gekennzeichnet,**
**daß** jeder Magnetkern durch ein Paket (22) aus mehreren Ringkernen (20) aus hochpermeablem Material mit hoher Sattigungsinduktion gebildet wird,
**daß** die Primärwicklungen (16) als multifilare Wicklungen ausgebildet sind,
**daß** die Kuhlvorrichtung (14) als vom Draht (2) durchsetzte Kuhlduse ausgebildet ist und in der Kurzschlußschleife (6) angeordnet ist,
und **daß** die Spannungsquelle (18) bipolare, symmetrische Spannungsimpulse beliebigen Zeitverlaufs, aber z.B. über Amplitude, Breite und/oder Frequenz einstellbaren Effektivwertes liefert.

2. Induktionsgluhe nach Anspruch 1, **dadurch gekennzeichnet, daß** die Primärwicklungen (16) sinoidal gewickelt sind.

3. Induktionsgluhe nach Anspruch 1 oder 2, **dadurch gekennzeichnet, daß** die Primärwicklungen (16) mit HF-Litze gewickelt sind.

4. Induktionsglühe nach Anspruch 1, **dadurch gekennzeichnet, daß** die Ringkerne (20) durch Schnitt- oder Ringbandkerne oder aus Blechen gestapelten Kernen gebildet werden.

5. Induktionsglühe nach Anspruch 1, bei der die Kurzschlußschleife (6) durch eine Fuhrung des einlaufenden Drahtes (2) über eine Kurzschlußrolle (4), eine Umlenkrolle (10) und zurück zur Kurzschlußrolle zum Drahtauslauf gebildet wird, **dadurch gekennzeichnet, daß** die Kühlduse (14) in der Kurzschlußschleife (6) kurz vor der Kurzschlußrolle (4) angeordnet ist.

6. Induktionsglühe nach Anspruch 5, **gekennzeichnet durch** eine nach der Kurzschlußrolle (4) vorgesehene Abblasdüse (17) für den auslaufenden Draht.

7. Induktionsglühe nach Anspruch 1, **dadurch gekennzeichnet, daß** die Spannungsquelle (18) einen aus dem Wechselstromnetz gespeisten Stromrichter (26) zur Lieferung einer einstellbaren Gleichspannung an einen Zwischenkreis (30) und einen mit dieser Gleichspannung gespeisten, bipolare symmetrische Spannungsimpulse einstellbaren Effektivwertes erzeugenden Wechselrichter (32) aufweist.

8. Induktionsglühe nach Anspruch 7, **dadurch gekennzeichnet, daß** die Kurvenform und/oder Amplitude und/oder Frequenz und/oder Breite der Spannungsimpulse einstellbar ist.

9. Induktionsgluhe nach einem der vorstehenden Anspruche, **dadurch gekennzeichnet, daß** jeder Transformator (20,22) einzeln zuschaltbar ist.

10. Induktionsgluhe nach einem der vorstehenden Anspruche, zur Warmebehandlung mehrerer unabhangiger Drahte, **dadurch gekennzeichnet, daß** die Drahte uber unabhangige Rollensysteme gemeinsam durch die Magnetkerne gefuhrt werden.

11. Induktionsgluhe nach Anspruch 10, **dadurch gekennzeichnet, daß** die Magnetkerne eine Rechteckform haben.

## Claims

1. An induction heating device for conductively heating at least one wire including a plurality of transformers, the primary windings of which are controlled in parallel and are wound around a respective magnetic core and the secondary windings of which are constituted by a common, short-circuited wire loop, in which the wire is guided successively with the aid of deflecting rollers through the magnetic cores, and including a cooling device for the heat-treated wire and a voltage source for supplying the primary windings, **characterised in that** each magnetic core is constituted by a set (22) of a plurality of annular cores (20) of highly permeable material with a high saturation induction, that the primary windings are in the form of multifilar windings, that the cooling device (14) is in the form of a cooling nozzle through which the wire (2) passes and is arranged in the short-circuit loop (6) and that the voltage source (18) supplies bipolar, symmetrical voltage pulses of any desired duration but of an effective value which is adjustable as regards amplitude, breadth and/or frequency.

2. An induction heating device as claimed in Claim 1, **characterised in that** the primary windings (16) are wound sinusoidally.

3. An induction heating device as claimed in Claim 1 or 2, **characterised in that** the primary windings (16) are wound with HF stranded wire.

4. An induction heating device as claimed in Claim 1, **characterised in that** the annular cores (20) are constituted by stamped cores or annular band cores or cores of stacked plates.

5. An induction heating device as claimed in Claim 1, in which the short-circuit loop (6) is formed by guiding the entering wire (2) over a short-circuit roller (4) and a deflecting roller (10) and back to the short-circuit roller to the wire exit, **characterised in that** the cooling nozzle (14) is arranged in the short-circuit loop (6) shortly before the short-circuit roller (4).

6. An induction heating device as claimed in Claim 5, **characterised by** a blasting nozzle (17) for the exiting wire after the short-circuit roller (4).

7. An induction heating device as claimed in Claim 1, **characterised in that** the voltage source (18) has a rectifier (26), supplied from the AC mains, for supplying an adjustable DC voltage to an intermediate circuit (30) and a rectifier (32), supplied with this DC voltage, producing bipolar, symmetrical voltage pulses of adjustable effective value.

8. An induction heating device as claimed in Claim 7, **characterised in that** the curve shape and/or amplitude and/or frequency and/or width of the voltage pulses is adjustable.

9. An induction heating device as claimed in one of the preceding claims, **characterised in that** each transformer (20, 22) may be switched on individually.

10. An induction heating device as claimed in one of the preceding claims for heat treating a plurality of independent wires, **characterised in that** the wires are guided together through the magnetic cores by independent roller systems.

11. An induction heating device as claimed in Claim 10, **characterised in that** the magnetic cores have a rectangular shape.

## Revendications

1. Recuit à induction destiné au réchauffement conductif d'au moins un fil, comprenant plusieurs transformateurs, dont les enroulements primaires dirigés parallèlement sont enroulés autour de respectivement un noyau magnétique propre et dont les enroulements secondaires sont formés par une boucle en fil commune, court-circuitée en soi, dans laquelle le fil est guidé à l'aide de rouleaux de guidage les uns derrière les autres à travers les noyaux magnétiques, ainsi qu'un dispositif de refroidissement pour le fil ayant été traité thermiquement et une source de tension destinée à alimenter les enroulements primaires,
**caractérisé en ce que**
chaque noyau magnétique est formé par un paquet (22) constitué de plusieurs noyaux toroidaux (20) en matériau hautement imperméable possédant une induction de saturation élevée,
les enroulements primaires (16) sont conçus comme des enroulements multifilaires,
le dispositif de refroidissement (14) est conçu comme une buse de refroidissement traversée par le fil (2) et est disposé dans la boucle court-circuitée (6),
et la source de tension (18) fournit des impulsions de tension bipolaires, symétriques, présentant un tracé temporel quelconque, mais par exemple une valeur efficace réglable par rapport à l'amplitude, la largeur et/ou la fréquence.

2. Recuit à induction selon la revendication 1, **caractérisé en ce que** les enroulements primaires (16) sont enroulés de façon sinusoidale.

3. Recuit à induction selon la revendication 1 ou 2, **caractérisé en ce que** les enroulements primaires (16) sont enroulés avec des fils de litz.

4. Recuit à induction selon la revendication 1, **caractérisé en ce que** les noyaux toroïdaux (20) sont formés par des tores enroulés ou fendus enroulés ou des noyaux empilés composés de tôles.

5. Recuit à induction selon la revendication 1, dans lequel la boucle court-circuitée (6) est formée par un guidage du fil (2) en train d'être introduit sur un rouleau court-circuité (4), un rouleau de guidage (10) et à nouveau en direction du rouleau court-circuité en vue du déversement du fil, **caractérisé en ce que** la buse de refroidissement (14) est disposée dans la boucle court-circuitée (6) un peu avant le rouleau court-circuité (4).

6. Recuit à induction selon la revendication 5, **caractérisé par** une busette à souffler (17) prévue après le rouleau court-circuité (4) pour le fil se déversant.

7. Recuit à induction selon la revendication 1, **caractérisé en ce que** la source de tension (18) comprend un convertisseur (26) alimenté par le réseau alternatif, destiné à fournir une tension continue réglable à un circuit intermédiaire (30) et un ondulateur (32) alimenté par cette tension continue, générant des impulsions symétriques bipolaires, présentant une valeur efficace réglable.

8. Recuit à induction selon la revendication 7, **caractérisé en ce que** la forme de la courbe et/ou l'amplitude et/ou la fréquence et/ou la largeur des impulsions de tension sont réglables.

9. Recuit à induction selon l'une quelconque des revendications précédentes, **caractérisé en ce que** chaque transformateur (20, 22) peut être mis sous tension individuellement.

10. Recuit à induction selon l'une quelconque des revendications précédentes, destiné au traitement thermique de plusieurs fils indépendants, **caractérisée en ce que** les fils sont guidés ensemble par l'intermédiaire de systèmes de rouleaux indépendants à travers les noyaux magnétiques.

11. Recuit à induction selon la revendication 10, **caractérisé en ce que** les noyaux magnétiques présentent une forme rectangulaire.
